# EUROPEAN PATENT APPLICATION

(11) **EP 4 841 478 A1**
(43) Date of publication of application: **18.11.2026**
(21) Application number: 25212524.0
(22) Date of filing: 30.10.2025
(51) Int. Cl.: G06F 16/955

(54) **UNIFORM RESOURCE IDENTIFIER DISCOVERY SYSTEM**

(30) Priority: 16.05.2025 US 202563806775 P
(71) Applicant: GOOGLE LLC, Mountain View CA 94043 (US)
(72) Inventor: KUMAR, Niraj, Mountain View, 94043 (US); TATAVARTHI, Krishna Kanth, Mountain View, 94043 (US); TICKOO, Ashish, Mountain View, 94043 (US); JANE, Adrian Jeremy, Mountain View, 94043 (US); LUKOSE, Deepak, Mountain View, 94043 (US); GOKHALE, Chaitanya Gajanan, Mountain View, 94043 (US); YIN, Hang, Mountain View, 94043 (US); TESSEMA, Eyuel Haileyesus, Mountain View, 94043 (US); LI, Wuyuan, Mountain View, 94043 (US); CAI, Zhuowei, Mountain View, 94043 (US)
(74) Representative: Marks & Clerk GST

(57) **Abstract**

Methods, systems, and apparatus, including computer programs encoded on a computer storage medium, for discovering uniform resource identifiers. A set of candidate uniform resource locators (URLs) of web pages are obtained. A landing page representation of content accessible at a given candidate URL is generated. The given candidate URL is classified as a destination landing page for a subset of existing account groups based on the landing page representation and account group representations of the subset of the plurality of existing account groups. Mappings between the candidate URL and the subset of existing account groups are created based on the classification of the candidate URL as a destination landing page. A destination URL to which a client device is redirected in response to interaction with a digital component is adjusted based on the mappings between the candidate URL as a destination landing page and the subset of existing account groups.

## Description

### BACKGROUND

The present disclosure relates to data processing, and in some aspects, discovering uniform resource identifiers (URIs) among a corpus of URIs.

As Internet usage has grown, so has the number of web pages providing information. Often, content that is presented to users on a web page will include links that redirect users to a specified uniform resource locator, or another uniform resource identifier. However, a static uniform resource locator may not adequately address the needs of all users, as such sometimes uniform resource locators are selected dynamically based on the context of the situation in which the uniform resource locator is being provided.

### SUMMARY

In general, one innovative aspect of the subject matter described in this specification can be embodied in methods that include the actions of obtaining, by a service system including one or more hardware processors, a set of candidate uniform resource locators (URLs) of web pages; generating, by the service system and for a given candidate URL among the set of candidate URLs, a landing page representation of content accessible at the given candidate URL; classifying, by the service system, the given candidate URL as a destination landing page for a subset of a plurality of existing account groups based on the landing page representation of the given candidate URL and account group representations of the subset of the plurality of existing account groups; creating, by the service system, mappings between the candidate URL and the subset of the plurality of existing account groups based on the classification of the candidate URL as a destination landing page for the subset of the plurality of existing account groups; and adjusting, by the service system, a destination URL to which a client device is redirected in response to interaction with a digital component based on the mapping between the candidate URL as a destination landing page and the subset of the plurality of existing account groups. Other embodiments of this aspect include corresponding systems, apparatus, and computer programs, configured to perform the actions of the methods, encoded on computer storage devices.

These and other embodiments can each optionally include one or more of the following features. Methods can include generating an account group representation of a given account group among the plurality of existing account groups, wherein the account group representation of the given account group among the plurality of existing account groups is a vector representing attributes of the given account group; and computing a level of match between the account group representation of the given account group and the landing page representation. Classifying the candidate URL as a destination landing page can include classifying the candidate URL as a destination landing page for the given account group based on the level of match being at least a minimum level of match.

Generating the account group representation of a given account group can include identifying one or more of (i) a group URL of the given account group, (ii) a digital component of the given account group, (iii) queries serviced by the given account group, or (iv) distribution keywords assigned to the given account group; generating, for the given account group, a compressed representation based on the one or more of (i) a group URL of the given account group, (ii) a digital component of the given account group, (iii) queries serviced by the given account group, or (iv) distribution keywords assigned to the given account group.

Creating the mappings between the set of matching account groups and the given candidate URL can include creating a data record that associates the given candidate URL with a given account group and a given account that contains the given account group.

Methods can include generating, for the given candidate URL, a set of landing page queries based, at least in part, on content accessible at the given candidate URL.

Generating the landing page representation of content accessible at the given candidate URL can include generating the landing page representation based on content accessible at the given candidate URL and the set of matching queries. Adjusting the destination URL to which the client device is redirected in response to interaction with the digital component can include adjusting the destination URL to the given candidate URL based on a given query within the set of matching queries being matched by a search query submitted by a client device.

Methods can include searching, by the service system, a plurality of existing account groups using the given candidate URL. Obtaining the set of candidate URLs can include obtaining a given set of URLs of account groups; obtaining a different set of URLs of a search system; generating a union of the given set of URLs and the different set of URLs, wherein the generated union is the set of candidate URLs; and extracting text or metadata from one or more landing pages at one or more candidate URLs in the set of candidate URLs or the one or more candidate URLs.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example environment in which URI/URL discovery can be performed.
FIG. 2 is a block diagram illustrating a system for implementing landing page URL discovery.
FIG. 3 is a flow chart of an example process for landing page URL discovery.
FIG. 4 is a block diagram of an example computer system.

Like reference numbers and designations in the various drawings indicate like elements.

### DETAILED DESCRIPTION

This specification is related to a system that discovers new uniform resource identifiers that can be used to dynamically redirect a client device to a relevant landing page in response to user interaction with content at a client device. This enables the system to reroute the client device based on the context in which the interaction occurred, rather than simply directing the client device to a static location specified in the content with which the interaction occurred.

As discussed in detail throughout this specification, the system discussed herein provides an efficient process for identifying relevant landing pages for a variety of different contexts (e.g., account group parameter combinations). In a particular use case, the system discussed herein can determine, for a particular account group, a set of landing pages that are relevant to that account group.

An account group is a segment of a content distribution account, and the account group can include one or more landing page uniform resource locators (URLs) that can be inserted into content distributed by the account group. Conventionally, the URLs included in the account group are specified by a content distributor controlling the account group, but this manual specification of URLs for landing pages can fail to provide sufficiently specific selection of a landing page when a content request (e.g., search query) is received. As such, users are sent to the pre-specified landing pages even when more specific landing pages are available.

Automation of landing page selection can help remedy the issue of users being directed to less relevant landing pages when a more relevant landing page exists, but conventional systems do not scale sufficiently to evaluate the vast number of web pages available as potential landing pages for purposes of discovering highly relevant landing pages for each known account group context. For example, tens of billions of web pages exist on the Internet and millions of account groups exist, such that without a solution that effectively scales to handle the potential account group/landing page combinations, even automated landing page selection will suffer from the problem of directing users to less relevant landing pages when more relevant landing pages exist because the system will not be able to remain current.

The ordered combination of operations of the present solution results in a process that enables sufficient scaling to effectively discover relevant landing pages for account groups even in the context of a continually growing number of combinations of account groups and candidate landing pages. As discussed in more detail below, one way in which the present solution effectively discovers relevant landing pages in an efficient manner is by the way in which the system performs the evaluation of relevance of landing pages to account groups. More specifically, the present solution reduces the dimensionality of the evaluation space and streamlines the evaluation process by selecting a candidate URL of a candidate landing page, and then searching the corpus of account groups for those account groups that are sufficiently similar to the candidate landing page. To facilitate this candidate URL based approach, the system can perform the determination on an account-by-account basis, meaning that all account groups within a single account can be evaluated to determine the level of similarity between the candidate landing page and each account group in the account, and once the evaluation is complete, the system can move to another account.

This candidate URL based approach results in several efficiencies that allow for scaling in the context of the large number of combinations of account groups and landing pages. First, the generation of a representation of the candidate landing page is a resource intensive process because machine learning models are generally employed to create embeddings of the candidate landing page, which is then used to determine the similarity between the candidate landing page and each existing account group within an account. As such, this URL based evaluation approach enables the embeddings of the candidate landing page to be generated once, and then used to generate the similarity measures between the candidate landing page and each of the account groups without recomputing the embeddings of the landing page for the evaluation of each different account group. This results in dramatic resource and time savings when evaluating the relevance of a large number of landing pages and a large number of account groups because the generation of the embeddings is orders of magnitude more computationally intense and time consuming as compared to the similarity calculations.

Additionally, the present solution generates shards of account group data prior to the candidate landing page similarity evaluation, and these shards include the account group level data as well as embeddings that were generated using the account group level data. For example, when an account group is created and/or updated, the system can create the embeddings for the account group that are later used for various tasks, including the candidate landing page similarity determinations.

Furthermore, since the data for the account groups, including account group embeddings, is stored in the data shard, the system can determine when the data in a particular account group has changed, and determine whether an updated candidate landing page evaluation should be performed. More specifically, changes to an account group may affect the relevance of the account group to available landing pages, such that the system can trigger an updated landing page relevance evaluation when a change to the account group has changed.

Similarly, because the generated account group data can be updated daily, it does not need to be regenerated when a periodic (e.g., every 7 days) landing page evaluation is performed. Periodic landing page evaluations may need to be performed because, even if a new evaluation isn't triggered by a change to an account group, the content of web pages often changes, such that the content of a particular landing page may not be the same from day to day or week to week, and therefore may no longer be sufficiently relevant to a particular account group to remain a landing page for that particular account group. As such, the system can simply reuse the stored account group data and reevaluate the relevance of candidate landing pages for the account group.

As discussed in more detail below, the system can obtain a candidate URL and generating a landing page representation (e.g., one or more embeddings) of content accessible at the candidate URL. The system uses the landing page representation to determine account groups that are sufficiently similar to the landing page. For example, the determination can be made using similarity measures between the landing page representation and an account group representation (e.g., one or more embeddings) of the account group. The system creates a mapping between the candidate URL and those account groups that are sufficiently similar to the candidate URL, which classifies the candidate URL as a destination landing page for those account groups. The system then dynamically uses the URL as the destination URL to which a client device is redirected in response to interaction with content distributed using the account group.

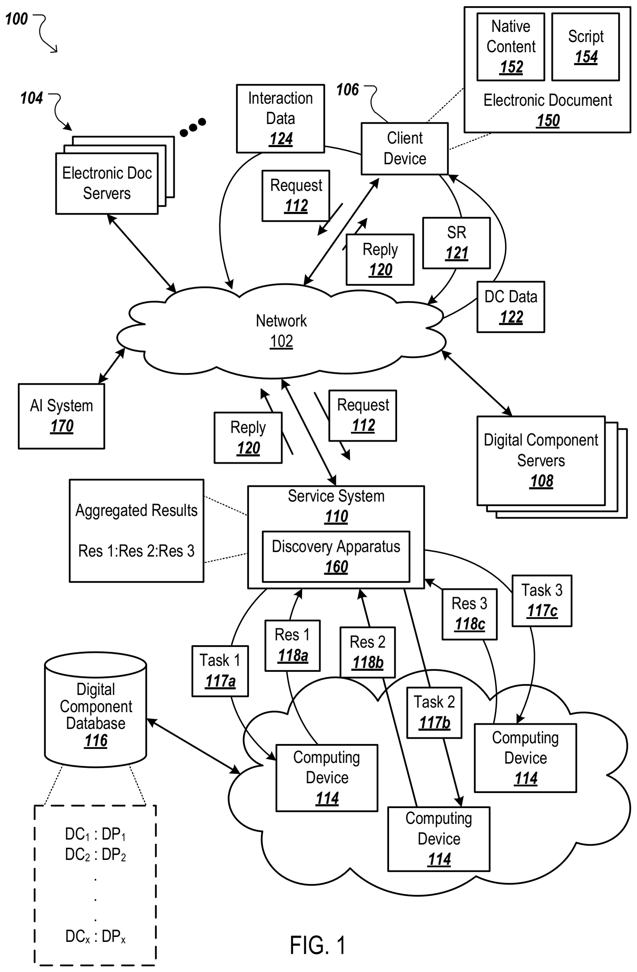

FIG. 1 is a block diagram of an example environment 100 in which URI (e.g., URL) discovery can be performed. The example environment 100 includes a network 102, such as a local area network (LAN), a wide area network (WAN), the Internet, or a combination thereof. The network 102 connects electronic document servers 104, client devices 106, digital component servers 108, and a service system 110. The example environment 100 may include many different electronic document servers 104, client devices 106, and digital component servers 108.

A client device 106 is an electronic device that is capable of requesting and receiving online resources over the network 102. Example client devices 106 include personal computers, gaming devices, mobile communication devices, digital assistant devices, augmented reality devices, virtual reality devices, and other devices that can send and receive data over the network 102. A client device 106 typically includes a user application, such as a web browser, to facilitate the sending and receiving of data over the network 102, but native applications (other than browsers) executed by the client device 106 can also facilitate the sending and receiving of data over the network 102.

A gaming device is a device that enables a user to engage in gaming applications, for example, in which the user has control over one or more characters, avatars, or other rendered content presented in the gaming application. A gaming device typically includes a computer processor, a memory device, and a controller interface (either physical or visually rendered) that enables user control over content rendered by the gaming application. The gaming device can store and execute the gaming application locally or execute a gaming application that is at least partly stored and/or served by a cloud server (e.g., online gaming applications). Similarly, the gaming device can interface with a gaming server that executes the gaming application and "streams" the gaming application to the gaming device. The gaming device may be a tablet device, mobile telecommunications device, a computer, or another device that performs other functions beyond executing the gaming application.

Digital assistant devices include devices that include a microphone and a speaker. Digital assistant devices are generally capable of receiving input by way of voice, and respond with content using audible feedback, and can present other audible information. In some situations, digital assistant devices also include a visual display or are in communication with a visual display (e.g., by way of a wireless or wired connection). Feedback or other information can also be provided visually when a visual display is present. In some situations, digital assistant devices can also control other devices, such as lights, locks, cameras, climate control devices, alarm systems, and other devices that are registered with the digital assistant device.

As illustrated, the client device 106 is presenting an electronic document 150. An electronic document is data that presents a set of content at a client device 106. Examples of electronic documents include webpages, word processing documents, portable document format (PDF) documents, images, videos, search results pages, and feed sources. Native applications (e.g., "apps" and/or gaming applications), such as applications installed on mobile, tablet, or desktop computing devices are also examples of electronic documents. Electronic documents can be provided to client devices 106 by electronic document servers 104 ("Electronic Doc Servers").

For example, the electronic document servers 104 can include servers that host publisher websites. In this example, the client device 106 can initiate a request for a given publisher webpage, and the electronic server 104 that hosts the given publisher webpage can respond to the request by sending machine executable instructions that initiate presentation of the given webpage at the client device 106.

In another example, the electronic document servers 104 can include app servers from which client devices 106 can download apps. In this example, the client device 106 can download files required to install an app at the client device 106, and then execute the downloaded app locally. Alternatively, or additionally, the client device 106 can initiate a request to execute the app, which is transmitted to a cloud server. In response to receiving the request, the cloud server can execute the application and stream a user interface of the application to the client device 106 so that the client device 106 does not have to execute the app itself. Rather, the client device 106 can present the user interface generated by the cloud server's execution of the app and communicate any user interactions with the user interface back to the cloud server for processing.

Electronic documents can include a variety of content. For example, an electronic document 150 can include native content 152 that is within the electronic document 150 itself and/or does not change over time. Electronic documents can also include dynamic content that may change over time or on a per-request basis. For example, a publisher of a given electronic document (e.g., electronic document 150) can maintain a data source that is used to populate portions of the electronic document. In this example, the given electronic document can include a script, such as the script 154, that causes the client device 106 to request content (e.g., digital component) from the data source when the given electronic document is processed (e.g., rendered or executed) by a client device 106 (or a cloud server). The client device 106 (or cloud server) integrates the content (e.g., digital component) obtained from the data source into the given electronic document to create a composite electronic document including the content obtained from the data source.

In some situations, a given electronic document (e.g., electronic document 150) can include a digital component script (e.g., script 154) that references the service system 110, or a particular service provided by the service system 110. In these situations, the digital component script is executed by the client device 106 when the given electronic document is processed by the client device 106. Execution of the digital component script configures the client device 106 to generate a request for digital components 112 (referred to as a "component request"), which is transmitted over the network 102 to the service system 110. For example, the digital component script can enable the client device 106 to generate a packetized data request including a header and payload data. The component request 112 can include event data specifying features such as a name (or network location) of a server from which the digital component is being requested, a device identifier corresponding the client device 106, such as a name (or network location, such as an Internet Protocol address) of the requesting device (e.g., the client device 106), a cookie of the service system 110 that was previously placed on the computing device by the service system 110, and/or information that the service system 110 can use to select one or more digital components, or other content, provided in response to the request. In some implementations, the cookie that is included in the component request 112 can be a cookie corresponding to an account of a user that is logged into the service system 110, which is referred to as a service cookie. The component request 112 is transmitted, by the client device 106, over the network 102 (e.g., a telecommunications network) to a server of the service system 110.

The component request 112 can include event data specifying other event features, such as the electronic document being requested and characteristics of locations of the electronic document at which digital component can be presented. For example, event data specifying a reference (e.g., URL) to an electronic document (e.g., webpage) in which the digital component will be presented, available locations of the electronic documents that are available to present digital components, sizes of the available locations, and/or media types that are eligible for presentation in the locations can be provided to the service system 110. Similarly, event data specifying keywords associated with the electronic document ("document keywords") or entities (e.g., people, places, or things) that are referenced by the electronic document can also be included in the component request 112 (e.g., as payload data) and provided to the service system 110 to facilitate identification of digital components that are eligible for presentation with the electronic document. The event data can also include a search query that was submitted from the client device 106 to obtain a search results page.

Component requests 112 can also include event data related to other information, such as information that a user of the client device has provided, geographic information indicating a state or region from which the component request was submitted, or other information that provides context for the environment in which the digital component will be displayed (e.g., a time of day of the component request, a day of the week of the component request, a type of device at which the digital component will be displayed, such as a mobile device or tablet device). Component requests 112 can be transmitted, for example, over a packetized network, and the component requests 112 themselves can be formatted as packetized data having a header and payload data. The header can specify a destination of the packet and the payload data can include any of the information discussed above.

The service system 110 chooses digital components (e.g., third-party content, such as video files, audio files, images, text, and combinations thereof, which can all take the form of advertising content or non-advertising content) that will be presented with the given electronic document (e.g., at a location specified by the script 154) in response to receiving the component request 112 and/or using information included in the component request 112. In some implementations the selection of a digital component includes the selection of an account group that will be used to respond to the request 112, and the selection of the account group can be performed in a similar manner described herein with reference to the selection of a digital component.

In some implementations, a digital component is selected in less than a second (e.g., within 100-200ms) to avoid errors that could be caused by delayed selection of the digital component. For example, delays in providing digital components in response to a component request 112 can result in page load errors at the client device 106 or cause portions of the electronic document to remain unpopulated even after other portions of the electronic document are presented at the client device 106.

Also, as the delay in providing the digital component to the client device 106 increases, it is more likely that the electronic document will no longer be presented at the client device 106 when the digital component is delivered to the client device 106, thereby negatively impacting a user's experience with the electronic document. Further, delays in providing the digital component can result in a failed delivery of the digital component, for example, if the electronic document is no longer presented at the client device 106 when the digital component is provided.

In some implementations, the service system 110 is implemented in a distributed computing system that includes, for example, a server and a set of multiple computing devices 114 that are interconnected and identify and distribute digital component in response to requests 112. The set of multiple computing devices 114 operate together to identify a set of digital components that are eligible to be presented in the electronic document from among a corpus of millions of available digital components (DC1-x). The millions of available digital components can be indexed, for example, in a digital component database 116. Each digital component index entry can reference the corresponding digital component and/or include distribution parameters (DP1-DPx) that contribute to (e.g., trigger, condition, or limit) the distribution/transmission of the corresponding digital component. For example, the distribution parameters can contribute to (e.g., trigger) the transmission of a digital component by requiring that a component request include at least one criterion that matches (e.g., either exactly or with some pre-specified level of similarity) one of the distribution parameters of the digital component.

In some implementations, the distribution parameters for a particular digital component are part of an account group and can include distribution keywords that must be matched (e.g., by electronic documents, document keywords, or terms specified in the component request 112) in order for the digital component to be eligible for presentation. Additionally, or alternatively, the distribution parameters can include embeddings that can use various different dimensions of data, such as website details and/or consumption details (e.g., page viewport, user scrolling speed, or other information about the consumption of data). The distribution parameters can also require that the component request 112 include information specifying a particular geographic region (e.g., country or state) and/or information specifying that the component request 112 originated at a particular type of client device (e.g., mobile device or tablet device) in order for the digital component to be eligible for presentation. The distribution parameters can also specify an eligibility value (e.g., ranking score, or some other specified value) that is used for evaluating the eligibility of the digital component for distribution/transmission (e.g., among other available digital components).

The identification of the eligible digital component can be segmented into multiple tasks 117a-117c that are then assigned among computing devices within the set of multiple computing devices 114. For example, different computing devices in the set 114 can each analyze a different portion of the digital component database 116 to identify various digital components having distribution parameters that match information included in the component request 112. In some implementations, each given computing device in the set 114 can analyze a different data dimension (or set of dimensions) and pass (e.g., transmit) results (Res 1-Res 3) 118a-118c of the analysis back to the service system 110. For example, the results 118a-118c provided by each of the computing devices in the set 114 may identify a subset of digital components that are eligible for distribution in response to the component request and/or a subset of the digital component that have certain distribution parameters. The identification of the subset of digital components can include, for example, comparing the event data to the distribution parameters, and identifying the subset of digital components having distribution parameters that match at least some features of the event data.

The service system 110 aggregates the results 118a-118c received from the set of multiple computing devices 114 and uses information associated with the aggregated results to select one or more digital components that will be provided in response to the request 112. For example, the service system 110 can select a set of winning digital components (one or more digital components) based on the outcome of one or more content evaluation processes, as discussed below. In turn, the service system 110 can generate and transmit, over the network 102, reply data 120 (e.g., digital data representing a reply) that enable the client device 106 to integrate the set of winning digital components into the given electronic document, such that the set of winning digital components (e.g., winning third-party content) and the content of the electronic document are presented together at a display of the client device 106.

In some implementations, the client device 106 executes instructions included in the reply data 120, which configures and enables the client device 106 to obtain the set of winning digital components from one or more digital component servers 108. For example, the instructions in the reply data 120 can include a network location (e.g., a Uniform Resource Locator (URL)) and a script that causes the client device 106 to transmit a server request (SR) 121 to the digital component server 108 to obtain a given winning digital component from the digital component server 108. In response to the request, the digital component server 108 will identify the given winning digital component specified in the server request 121 (e.g., within a database storing multiple digital components) and transmit to the client device 106, digital component data (DC Data) 122 that presents the given winning digital component in the electronic document at the client device 106.

When the client device 106 receives the digital component data 122, the client device will render the digital component (e.g., third-party content), and present the digital component at a location specified by, or assigned to, the script 154. For example, the script 154 can create a walled garden environment, such as a frame, that is presented within, e.g., besides the native content 152 of the electronic document 150. In some implementations, the digital component is overlayed over (or adjacent to) a portion of the native content 152 of the electronic document 150, and the service system 110 can specify the presentation location within the electronic document 150 in the reply 120.

Digital components that are available for selection and distribution for a given content provider can be included together in an account of the content distributor, and groups of the different digital components can be grouped together in different account groups (e.g., sections or delineations) of the account. Each account group includes one or more digital components and other distribution parameters that control whether the one or more digital components are eligible to be served in response to a received search query, or another data request. For example, a given account group can specify a first set of distribution parameters that control distribution of the digital components in that account group, while a different account group can specify a different set of distribution parameters that control distribution of the digital components in the different account group. The account groups can also include other distribution parameters that can be used to select which digital component from a given account group is distributed in response to receipt of a search query.

Some account groups can include one or more distribution keywords, while other account groups may be keywordless, and not include any distribution keywords. In some situations, the selection of an account group can be based on a signal, or a combination of signals, rather than being based directly on distribution keywords themselves. For example, as discussed in more detail below, the selection of an account group can be based on one or more of digital components included in the account group and/or landing pages of the account group.

The digital components that are available for selection and presentation at user devices include links to URLs (e.g., of landing pages), and interaction with the digital components will redirect the client device 106 to the URLs. In some situations, an account group can include a set of URLs (e.g., one URL or multiple URLs) that can be used for some or all of the digital components in the account group. For example, a specific URL from the set of URLs can be selected on a per-query basis and inserted into, or otherwise added to in the form of a link, the digital component selected for distribution in response to a query. In some situations, the URLs specified for one account group may differ from the URLs specified for a different account group.

In some implementations, the client device 106 is redirected to a different URL than the URL linked in the digital component by way of dynamic universal resource locator modification that is performed in response to interaction with the digital component at the client device 106. For example, interaction with the digital component, which includes a display URL (e.g., example[.]com), can generate interaction data 124 specifying that the interaction with the digital component occurred. The interaction data 124 can be delivered to the service system 110, which can then select a different URL than the display URL and redirect the computing device to the different URL than the display URL. This can result in the computing device being redirected to a web page (e.g., landing page for the digital component) that contains information that is more relevant to the event data (e.g., a user search query) and/or distribution keywords used to distribute the digital component.

The different URL can be dynamically chosen and used to redirect the client device 106 based, for example, on the event data or distribution keywords. For example, the interaction data 124 can include a search query (or any other event data) that was submitted with the request 112 and/or used to select the digital component for distribution. The interaction data 124 can also include information specifying one or more of an identifier of the digital component with which the interaction occurred, an identifier of an account that contains the digital component, an identifier of a content provider (or another entity) that controls the account containing the digital component. Using some or all of this information, the service system 110 can determine a relevant web page corresponding to the interaction (e.g., that differs from a web page located at the display URL) and select the URL of that relevant web page as the redirect destination of the client device 106. In this way, the client device 106 can be dynamically routed to a more relevant web page based on the context in which the interaction with the digital component occurred.

To facilitate the selection of a URL for a digital component and/or the dynamic modification of the URL to which the client device 106 will be redirected in response to user interaction with a digital component, the service system 110 performs a series of operations to evaluate URLs that are eligible to be used URL, generate digital components that are relevant to the content of the candidate URLs, and determine when to perform the dynamic modification following a user interaction with a digital component.

To ensure the relevance of landing pages to which client devices 106 are redirected in response to interaction with the digital component, the service system 110 includes a discovery apparatus 160. The discovery apparatus 160 includes hardware circuitry, such as computing devices, processors, memory and/or other hardware circuitry. The discovery apparatus 160 is configured to discover URLs of landing pages that are relevant to various account groups and assign the URLs of those relevant landing pages as URLs for the account groups to which the landing pages were deemed relevant.

In some implementations, the service apparatus 110 can include, or be in communication with, an artificial intelligence (AI) system 170, which can be used to support the generation of account group representations of account groups and/or landing page representations for landing pages of candidate URLs. In some implementations, the AI system 170 can be a large language model ("LLM"), which is also referred to simply as a language model, is a model trained to generate and understand human language. LLMs are trained on massive datasets of text and code, and they can be used for a variety of tasks. For example, LLMs can be trained to translate text from one language to another; summarize text, such as web site content, search results, news articles, or research papers; answer questions about text, such as "What is the capital of Georgia?"; create chatbots that can have conversations with humans; and generate creative text, such as poems, stories, recommendations, code; and generate compressed representations (e.g., contextual embeddings) of text input by leveraging, for example, transformer architectures.

In some implementations, the AI system 170 includes a language model that is pre-trained, i.e., trained on a language modeling task that does not require providing evidence in response to user questions, and the service apparatus 110 (e.g., using AI system 170) causes the AI system 170 to generate output sequences according to the pre-determined syntax through natural language prompts in the input sequence. The final layer of the AI system 170 can produce, for example, a vector for each token or a pooled representation of the entire input. For example, the initial input to the AI system 170 can be a set of account group parameters (or landing page parameters) and the output of the final layer can be a vector that is a compressed representation of the full set of account group parameters (or landing page parameters), or a subset of the account group parameters (or landing page parameters).

As previously discussed, the scale of the problem being addressed makes it computationally infeasible to approach this URL discovery in a brute force manner (e.g., by way of iteratively evaluating every landing page - account group pair). As such, the discovery apparatus 160 employs an ordered combination of operations that effectively and efficiently discover relevant landing pages for each given account group and assign the URLs of those relevant landing pages to the corresponding account group to which the URLs were deemed relevant. The ordered combination of operations also enables the service system 110 to update the URLs for each account group periodically, e.g., on a weekly basis, to maintain fresh data. In contrast, a brute force approach would require orders of magnitude more time to complete a single update, making it infeasible.

As discussed in more detail below, the operations of the present solution include the discovery apparatus 160 obtaining a candidate URL and generating a landing page representation (e.g., one or more embeddings) of content accessible at the candidate URL. The discovery apparatus 160 uses the landing page representation to determine account groups that are sufficiently similar to the landing page. For example, the determination can be made using similarity measures between the landing page representation and an account group representation (e.g., one or more embeddings) of the account group. The discovery apparatus 160 creates a mapping between the candidate URL and those account groups that are sufficiently similar to the candidate URL, which classifies the candidate URL as an expansion URL for those account groups, which can then be used as the destination URL to which a client device is redirected in response to interaction with content distributed using the account group.

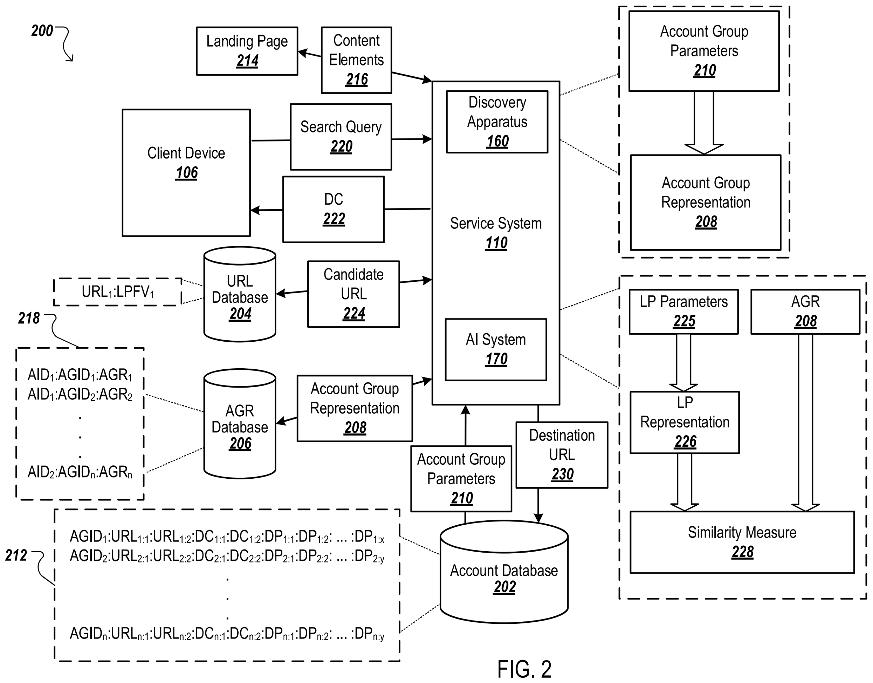

FIG. 2 is a block diagram illustrating a system 200 for landing page URL discovery. The system 200 includes the service system 110 (including the discovery apparatus 160 and the AI system 170), the client device 106, an account database 202, a URL database 204, and an account group representation (AGR) database 206. Each of the databases can include hardware memory devices that enable the storage of data in data structures. The description below describes operations as being performed by the service system 110, but it should be understood that the discovery apparatus 160 and/or AI system 170 can be implemented as part of the service system 110, such that operations described below can also be performed by the discovery apparatus 160 and/or AI system 170.

The service system 110 can generate account group (AG) representations 208 of account groups stored in the account database 204. More specifically, the account database 204 can store multiple accounts (e.g., content distribution accounts), that can each contain multiple account groups. The account group representation 208 for each account group, from among the multiple account groups, can be generated when the account group is created or at a specified time after the account group is created. For example, the account group representation 208 for a given account group may be created when a content distributor in control of the account group opts the account group into dynamic URL selection services offered by the service system 110. The service system 110 can also periodically (e.g., weekly) regenerate the account group representation 208 for a given account group or regenerate the account group representation (AGR) 208 when a change is made to the account group (e.g., one or more distribution parameters are modified).

To initiate the generation of the account group representation 208 for one or more of the account groups, the service system 110 can obtain a set of account group parameters 210 for a set of account groups that are available, for example, in the account database 202. As shown, the account database 202 includes a data structure 212 that stores the account group parameters 210 for existing account groups in data records. The data record corresponding to a given account group can include, for example, an account group identifier (e.g., AGID₁) and the set of account group parameters 210 for that account group corresponding to the account group identifier. In some implementations, the set of account group parameters 210 for each existing account group can include one or more distribution keywords, one or more web page addresses, and/or one or more digital components.

The account group parameters 210 for a given account group (and each different account group) can be stored with a reference to an account group identifier corresponding to the account group and/or an account identifier of an account in which the given account group is included. As such, the service system 110 can query the account database 202 using the account group identifier to retrieve the account group parameters 210 of the given account group. Alternatively, the service system 110 can iterate through the data records in a sequential fashion to process each data record in the data structure 212.

The service system 110 can use the account group parameters 210 to generate, at least a portion of, the AGR 208 of the account group corresponding to the account group parameters 210. For example, the account group parameters 210 can be input to the AI system 170, which can generate an embedding or contextual embedding of the account group parameters 210 that is included in the AGR 208. For example, the AI system 170 can transform the account group parameters 210 into a lower-dimensional representation of the account group parameters 210 while preserving semantic and contextual information related to the account group parameters 210.

The service system 110 can generate a different AGR 208 for each account group contained in the account database 202, or a subset of the account groups. The AGR 208 of each account group can be a vector representing attributes of the account group for which the AGR 208 was generated. For example, the account group representation AGR₁ of FIG. 2 can be generated for account group identifier AGID₁, and stored in the AGR database 206 with a reference to AGID₁. In this example, the account group representation AGR₁ can be generated based on the account group parameters 210 that are stored in the data structure 212 with a reference to the account group identifier AGID₁. More specifically, the record for AGID₁ includes the account group parameters URL_{1:1}, URL_{1:2}, DC_{1:1}, DC_{1:2}, DP_{1:1}, DP_{1:2}, ... DP_{1:x}. In this example, URL_{1:1} and URL_{1:2} are parameters representing the attributes of two different URLs (and/or content located at the URLs) that are assigned to (included in) the account group having the account group identifier AGID₁. DC_{1:1} and DC_{1:2} are parameters representing attributes of two different digital components that are assigned to (included in) the account group having the account group identifier AGID₁. DP_{1:1}, DP_{1:2}, ... DP_{1:x} are parameters representing attributes of X (e.g., a non-zero integer) distribution parameters (e.g., keywords, etc.) that are assigned to (included in) the account group having the account group identifier AGID₁. In operation, these account group parameters 210 can be input to the service system 110 (e.g., AI system 170), and the resulting vector output can be the account group representation 208, or part of the account group representation 208 that is stored in the AGR database 206.

The service system 110 can also collect account group parameters that are not specified by an administrator of the account. For example, for each of the URLs that are specified in an account group, the service system 110 can create a landing page feature vector (LPFV) that represents the content of the landing page located at the URL. The feature vector is a numerical representation of a landing page's (i.e., web page's) content, capturing its characteristics in a format that machine learning models, or other applications, can process. It transforms complex, unstructured data (e.g., text, images, metadata) into a structured array of numbers, where each number (or dimension) represents a specific feature or attribute of the page. These features are derived from the page's content, structure, and metadata, enabling quantitative analysis for tasks like ranking, classification, or similarity comparison.

The service system 110 creates the feature vectors by crawling the landing page (e.g., landing page 214) of a given URL and extracting content elements 216, such as the text and metadata available at the URL. The service system 110 tokenizes the text into n-grams and creates key-value pairs of structured data representing the content of the landing page. Using these key-value pairs, the service system 110 can capture the overall semantic meaning of the landing page based on various evaluations, such as term frequency analysis, inverse document frequency analysis, the presence of certain keywords in the document, topics inferred from the text, and metadata associated with the landing page. These features can optionally be encoded in a numerical vector representing the web page, which can be stored in the account database 202 (or another database) with a mapping to the URL. As such, these features can be included in the account group parameters 210 with which the account group representation 208 is generated.

Each account group can include one or more digital components and one or more distribution keywords that control whether the one or more digital components are eligible to be served in response to a received search query, matching for instance the distribution keywords of a given account group. The digital components can be processed by the service apparatus 110 in a manner similar to that discussed above with reference to the web pages at the listed URLs, and the resulting parameters, can be stored in the account database 202 and included in the account group parameters 210 used to create the account group representation 208. The account groups can also include other distribution parameters, such as those discussed above with reference to FIG. 1, which can also be stored in the account database 202 and included in the account group parameters 210 used to create the account group representation 208 (e.g., a compressed representation of account group parameters 210).

Each of the different account group representations 208 can be stored in the account group representation (AGR) database 206. For example, an account group representation data structure 218 can include records that logically map, associate, link, or index each account group representation 208 to their corresponding account group identifiers (e.g., the account group identifier corresponding to the account group parameters 210 used to generate the compressed representation 208). In some implementations, a record that logically associates, links, or indexes a compressed representation 208 with its corresponding account group identifier can also include the account identifier of an account that includes the account group corresponding to the account group identifier. In this way, the relationships between account groups within the same account can be determined.

In some implementations, the account group representations 208 can be stored in the account database 202 (e.g., indexed their corresponding account group identifiers). In some implementations, the account group representation data structure 218 can include additional information beyond that discussed above. For example, the account group representation data structure 218 can include any of the account group parameters 210.

In some implementations, the account group parameters 210 for a given account group include a set of queries that were previously serviced by the given account group. For example, assume that the search query "red shoes" (e.g., search query 220) was received by the service system 110, and the account group AGID₁ was selected to distribute a digital component (e.g., DC 222) in response to the search query "red shoes". In this example, the search query "red shoes" can be stored as an account group parameter for the account group AGID₁. In these implementations, the logged search queries can be stored in the data structure 212 and/or the account group representation data structure 218 and can also be used to generate the account group representation 208 for the account group AGID₁. In some implementations, the set of queries that are stored can be limited to only those queries for which the distributed digital component was interacted with (e.g., clicked) by a user after distribution. The set of queries can additionally, or alternatively, be limited to those search queries that exactly match a distribution keyword of the account group.

After the service system 110 generates the account group representation for a set of account groups (e.g., all account groups in a particular account or group of accounts), the service system 110 can perform URL discovery for that set of account groups. Specifically, the service system 110 can select a candidate URL 224 from the URL database 204 and determine whether the candidate URL 224 qualifies as a destination URL for any of the account groups.

The URL database 204 stores a corpus of candidate URLs that can be evaluated as potential destination URLs for account groups. The corpus of candidate URLs can include, for example, a union of all URLs that are stored in the account database 202 and a set of URLs that have been indexed from the Internet (e.g., that are not included in the account database 202). The URLs stored in the URL database 204 can be filtered, as desired, to reduce the number of candidate URLs that are considered, but it is not required. The filtering can, include, for example, limiting the URLs to the URLs for web pages having a minimum quality score, as scored by a separate search system. The quality scores can be received as input to the service system 110 after they are generated by a separate search system, so the generation of those quality scores are not discussed herein, and the manner in which the scores are generated does not affect the implementation of the present system. However, in some situations, signals relevant to the quality of a given URL can be determined based on one or more of the quality of the content on the page located at the URL, user engagement with the page, freshness of content on the page, and/or other signals.

In some implementations, the candidate URL 224 selected by the service system 110 can be a URL having a same second level domain as one or more URLs in the account groups in an account for which URL discovery is being performed. As previously discussed, the URLs in an account can be pre-specified for one or more of a given digital component, a given account group, and/or at the account level. For example, assume that the URL in an account group is example[.]com, and is specified by an administrator of a given content distribution account. In this example, the administrator may input the URL into the account interface, and pre-assign it as a destination URL for a single digital component, a group of digital components that are in a same account group (e.g., a sub-portion of an account), or for all digital components in the account. This pre-assignment of the destination URL designates the destination URL for inclusion in the digital components corresponding to the assignment. Continuing with this example, the candidate URLs 224 that are selected by the service system 110 can be one or more of the URLs of web pages that share the same second level domain example[.]com. For instance, example[.] com/shoes, example[.]com/shoes/women, and example[.]com/shoes/women/hiking books are all examples of candidate URLs that share the second level domain example[.]com.

In some implementations, the service system 110 can determine whether a given candidate URL is eligible to be a destination URL for a given account based on URL rules specified by an administrator of the account. For example, the URL rules can be submitted to the service system 110 as a set of conditions a candidate URL must meet in order to be eligible as a destination URL for the given account. As such, the service system 110 can evaluate the given candidate URL to determine whether the conditions specified by the URL rules are met. If the conditions are not met, the URL will not be considered, or further evaluated, as it relates to that given account (e.g., processing of the URL will be terminated). If the conditions are met, the service system 110 will continue to evaluate the candidate URL as a potential destination URL for the given account. In this way, the URL rules operate to reduce the processing required by the service system 110 by bypassing accounts for which the candidate URL does not satisfy the URL rules.

The URL rules for a given account (or account group) can be specified in various ways. For example, the URL rules can specify that a candidate URL must contain a specified phrase (e.g., one or more words), such as "shoes," which is referred to as a phrase constraint. In this example, the phrase constraint would make the URLs "example[.]com/shoes," "example[.]com/shoes/women," and "example[.]com/shoes/women/hiking books" eligible for evaluation as a potential destination URL for the given account. In contrast, the phrase constraint "shoes," would render the URLs "example[.]com/toys," "example[.]com/toys/dolls," and "example[.]com/toys/cards" ineligible as destination URLs for the given account, such that the service system 110 can terminate evaluation of these URLs as potential destination URLs for the given account.

Another URL rule can specify a feed of approved URLs and/or a set of rules regarding additional URLs that can qualify as candidate URLs. For example, the URL rule for a given account can provide the location at which the URL feed is located, and a set of rules specifying that enable the service system 110 to determine which URLs qualify as candidate URLs of the given account. The rules can specify, for example, PageFeedLabel=television and PageFeedLabel=InStock. In this example "television" and "Instock" are labels configured on URLs in the page feeds. As such, the service system 110 can identify, as eligible candidate URLs, URLs that are associated with the labels "television" and "Instock".

For an eligible candidate URL, the service system 110 (e.g., by way of the discovery apparatus 160) can access (e.g., crawl) the landing page 214 located at the candidate URL 224 and extract content elements 216 (e.g., portions of content) of the landing page 214 and/or the candidate URL 224. The content elements 216 can include one or more of a title of the landing page 214, portions of text (e.g., phrases) presented by the landing page 214, and/or metadata of the landing page 214. The metadata can include, for example, a description of the landing page 214, keywords of the landing page 214, and language of the landing page 214. The service system 110 can create a set of landing page (LP) parameters 225 (e.g., a set of parameters of the landing page) using the extracted content elements 216. In some implementations, the service system 110 can include portions (e.g., phrases) of the candidate URL 224 itself in the generated landing page parameters 225.

The service system 110 can also generate a set of landing page queries using the content elements 216, metadata, and/or URL itself. The set of landing page queries can be, for example, phrases that are relevant to the landing page 214. These phrases can be considered, for example, queries that would trigger presentation of the landing page 214 in a search results page and/or phrases that would trigger the use of the URL as a destination URL for the account group in response to being matched by a search query 220 received from a client device 106. In some implementations, the AI system 170 can be used to generate the landing page queries. For example, the content elements 216, metadata, and/or URL itself can be input to the AI system 170 with a request that the AI system 170 return a list of queries (e.g., phrases) most similar to the content input to the AI system 170. In some implementations, the service system 170 can include the landing page queries in the generated landing page parameters 225. In some implementations, the service system 110 can additionally, or alternatively, store the landing page queries for later use, as discussed later.

The service system 110 can generate a landing page representation 226 using some, or all, of the landing page parameters 225. For example, the service system 110 can create a landing page feature vector (LPFV) that represents the content (and/or other attributes) of the landing page 214 located at the candidate URL. The feature vector is a numerical representation of a landing page's (i.e., web page's) content, capturing its characteristics in a format that machine learning models, or other applications, can process. It transforms complex, unstructured data (e.g., text, images, metadata) into a structured array of numbers, where each number (or dimension) represents a specific feature or attribute of the page. These features are derived from the landing page parameters 225 (e.g., the page's content, structure, and metadata), enabling quantitative analysis for tasks like ranking, classification, or similarity comparison.

The service system 110 creates the feature vectors by crawling the landing page 214 of a given candidate URL 224 and extracting the text and metadata, as previously discussed. The service system 110 tokenizes the extracted text and/or metadata into n-grams and creates key-value pairs of structured data representing the content of the landing page 214. Using these key-value pairs, the service system 110 can capture the overall semantic meaning of the landing page 214 based on various evaluations, such as term frequency analysis, inverse document frequency analysis, the presence of certain keywords in the landing page 214, topics inferred from the text, and metadata associated with the landing page 214.

These features can be encoded in a numerical vector representing the landing page 214, which can be stored in the candidate URL database 204 (or another database) with a mapping to the URL of the landing page 214. For example, as shown in FIG. 2, the landing page feature vector (LPFV₁) for URL₁ is stored in the URL database 204 and mapped to URL₁. In this way, URL₁ can be used to search the candidate URLs database 204 to retrieve LPFV₁ for further processing, as desired. In some implementations, the landing page representation 226 can include one or more of the landing page feature vector, the content elements 216, the landing page queries and/or the URL.

The service system generates a similarity measure 228 between the landing page representation 226 of a candidate URL 224 and the account group representation 208 for a given account group. The similarity measure 228 can represent the level of match between the account group represented by the AGR 208 and the landing page 214 at the candidate URL, which also constitutes the level of match between the account group and the candidate URL. As such, the similarity measure/level of match can be used to determine whether the candidate URL qualifies as a destination landing page for the account group. For example, when the level of match (e.g., similarity measure 228) meets or exceeds a specified minimum level of match (e.g., minimum similarity measure threshold), the service system 110 can classify the candidate URL 224 as a destination landing page for the account group corresponding to the AGR 208. In contrast, when the level of match does not meet or exceed the specified minimum level of match, the service system 110 can determine that the candidate URL 224 does not qualify as a destination landing page for the account group corresponding to the AGR 208.

In some implementations, the service system can compute similarity measures 228 between the AGR 208 and landing page representations 226 for multiple different candidate URLs 224. In these implementations, the service system 110 can rank the different candidate URLs 224 based on their respective similarity measures 228 to the account group and select a subset including fewer than all of the candidate URLs 224 as destination landing pages for the account group represented by the AGR 208. For example, the service system 110 can select N candidate URLs having the highest similarity measures. In this example, the minimum level of match can be considered the similarity measure 228 of the candidate URL 224 having the N^{th} highest similarity measure 228.

Note that a variety of similarity techniques can be used to determine the relevance between landing page representations 226 and AGRs 208. Some example similarity techniques include dot product similarity, cosine similarity, Jaccard similarity, and Euclidean distance. Additionally, specially trained machine learning systems can be used to evaluate the relevance (or appropriateness) of content elements for a given landing page of a candidate URL and return a score. The particulars of these existing similarity techniques are known and therefore not described in detail in the present specification, but the outputs of these models can be used as "scores" or "values" expressing the relevance and/or appropriateness of using one or more content elements in digital components in an account group.

The service system 110 can create mappings between a given candidate URL 224 and account groups for which the candidate URL 224 has been classified as destination URL 230 (e.g., based on the classification of the candidate URL 224 as a destination landing page for the account group). For example, the service system 110 can store the candidate URL 224 in the account group as a destination URL 230 for digital components distributed by the account groups. Additionally, or alternatively, the service system 110 can store the mappings between the given candidate URL 224 and the account groups in the URL database 206 or another database.

As previously discussed, once the service system 110 selects a candidate URL 224 (or group of candidate URLs), the service system 110 can exhaustively determine whether the candidate URL 224 qualifies as a destination URL for all account groups in a single account, or in all account groups across multiple accounts, such that the service system 110 can reduce the amount of processing required to iterate across all candidate URLs and all account groups. Also, the operations discussed above can be iteratively performed and/or performed in parallel for different candidate URLs, such that discovery of new destination URLs can be completed for all account groups and all candidate URLs.

With respect to a given account group, performance of the URL discovery process can be triggered when a change to the account group is detected by the service system110. Additionally, or alternatively, performance of the URL discovery process can be triggered periodically (e.g., each week) so that the destination URLs for each account group can be kept up to date.

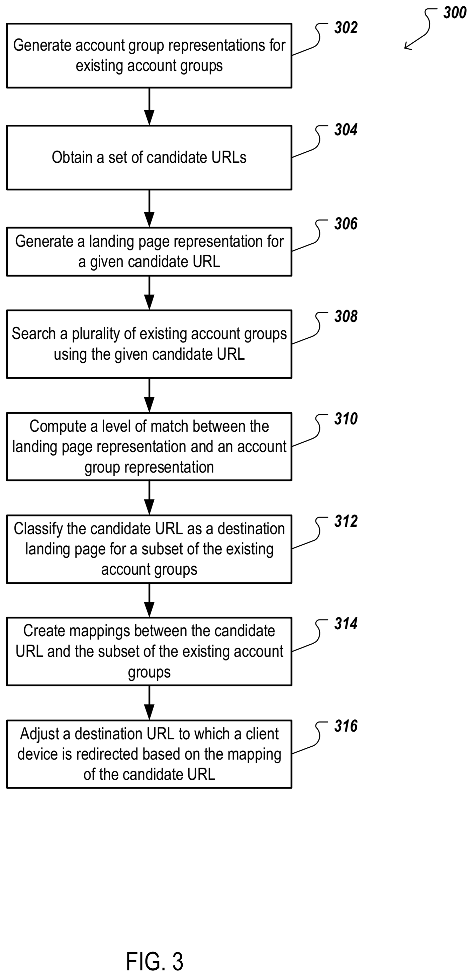

FIG. 3 is a flow chart of an example process 300 for landing page URL discovery. Operations of the process 300 can be performed by one or more systems that include one or more computing devices. Operations of the process 300 can be implemented as instructions stored on one or more non-transitory computer readable medium, and execution of the instructions can cause specially configured and/or programmed circuitry to perform operations of the process 300.

Account group representations are generated for existing account groups (302). In some implementations, the account group representation can be generated for each existing account group in a same account, and across multiple different accounts. The account group representation of each given account group among the existing account groups is a vector representing attributes of the given account group.

As part of generating the account group representations, the system can identify one or more of (i) a group URL of a given existing account group, (ii) a digital component of the given existing account group, (iii) queries serviced by the given existing account group, or (iv) distribution keywords assigned to the given existing account group. In turn a compressed representation (e.g., vector representation) of the given existing account group can be generated using the one or more of (i) a group URL of the given existing account group, (ii) a digital component of the given existing account group, (iii) queries serviced by the given existing account group, or (iv) distribution keywords assigned to the given existing account group.

As discussed above, the account group representation can be generated, for example, by creating an embedding using account group parameters of the account groups. For example, a model trained to generate embeddings of textual input can be used, such that the account group parameter of the account group can be input to the model, and the account group representation for the account group can be received as output from the model. The generation of the account group representations are discussed in detail with reference to FIG. 2 and is not repeated here.

A set of candidate URLs is obtained (304). In some implementations, the set of candidate URLs can be accessed from a URL database, as previously discussed. The URL database can be a pre-existing set of stored candidate URLs, or the URL database can be populated with a set of candidate URLs that are aggregated from multiple sources.

In some implementations, the system can aggregate URLs from an account database and an external system, such as a search system. For example, the system can obtain a given set of URLs from account groups in an account group database, and also obtain a different set of URLs of a search system. In this example, the system can generate a union of the given set of URLs and the different set of URLs, and the generated union can be the set of candidate URLs that are obtained by the system. The set of candidate URLs can be stored in a database for further processing.

A landing page representation is generated for a given candidate URL (306). In some implementations, the given candidate URL is selected from the set of candidate URLs and the landing page representation is generated using content accessible at the given candidate URL and/or the given candidate URL itself. For example, as previously discussed, the system can crawl the landing page of the given candidate URL and extract a set of content elements. The content elements and other attributes of the candidate URL can be used (e.g., aggregated) to form a set of landing page parameters for the given candidate URL. The set of landing page parameters can then be used to generate the landing page representation. For example, the system can create a landing page feature vector representing content of the landing page (and/or other attributes of the landing page), as discussed with reference to FIG. 2. In some implementations, the system can generate landing page queries based, at least, in part on the content accessible at the candidate URL, as previously discussed. These landing page queries can be included in the landing page parameters, and/or stored and used for other purposes, as discussed later.

A plurality of existing account groups are searched using the given candidate URL (308). In some implementations, the system can use the given candidate URL as a search key to identify account groups for which the given candidate URL is eligible to be a destination landing page. As previously discussed, the given candidate URL can be required to satisfy URL rules of an account for the given candidate URL to be considered eligible to be a destination URL for account groups in the account. In this way, the system can reduce the amount of processing required to identify new destination URLs for account groups, for example, because candidate URLs that are not eligible to be candidate URLs for any accounts can be quickly discarded before resource intensive processing is performed.

In some implementations, a given candidate URL is only eligible to be a destination URL for an account if the given candidate URL has a same second level domain as a current destination landing page/URL included in the account. For example, assume that the account includes example[.]com as a destination landing page in one or more account groups. In this example, if the given candidate URL is a page in the second level domain example[.]com (e.g., example.com/shoes), the given candidate URL is eligible to be a destination landing page for the account, and further processing will occur. In contrast, if the given candidate URL is not in the same second level domain as an existing destination URL in the account, the given candidate URL will not be processed further with respect to that account.

In some implementations, the owner/administrator of the account can provide a set of second level domains and/or URLs that can be used to determine whether a given candidate URL is eligible to be a destination lading page for the account. For example, if the given candidate URL is in a same second level domain as any second level domain in the set, the given candidate URL can be deemed eligible, and processed further to determine whether the candidate URL qualifies as a destination landing page. If the given candidate URL is not in the same second level domain as any second level domain in the set, the given candidate URL can be deemed ineligible, and processing of that given candidate URL with respect to the given account can be halted/terminated.

A level of match between the landing page representation and an account group representation is computed (310). In some implementations, the level of match between the landing page representation and multiple different account group representations can be computed. For example, the level of match can be performed with respect to each account group for which the candidate URL was deemed eligible to be a destination landing page.

In some implementations, a dot product (or another appropriate similarity measure) can be computed between the landing page representation of candidate URL and the account group representations of account groups for which the given candidate URL is eligible to be a destination landing page. Computing a dot product using the stored account group representations that were previously computed is orders of magnitude faster than having to generate the account group representations and then generate a similarity measure. As such, the similarity measures between the landing page representation (which can be computed after the given candidate URL is deemed eligible) and account group representations can be computed in a fraction of the time it would take to perform all the operations after selecting the given candidate URL for processing. Furthermore, the analysis is more complete than existing techniques, without negatively affecting latency, because a larger corpus of account groups and candidate URLs can be considered, thereby resulting in a more exhaustive analysis than would otherwise be possible. In contrast, existing techniques can only manage a similar corpus at the cost of additional latency and using additional computation resources.

The candidate URL is classified as a destination landing page for a subset of the existing account groups (312). In some implementations, the classification is based on the landing page representation of the given candidate URL and account group representations of the subset of the plurality of existing account group., For example, the classification of the given candidate URL as a destination landing page for the subset of the plurality of existing account groups can be conditioned, or otherwise based, on the level of match computed above being at least a minimum level of match, as discussed above with reference to FIG. 2.

Mappings between the given candidate URL and the subset of existing account groups are created (314). In some implementations, the mappings can be created based on the classification of the given candidate URL as a destination landing page for the subset of the plurality of existing account groups. The mappings can be created in a variety of ways. For example, the mappings can be created by adding the given candidate URL to the corresponding account groups, or a data record can be created in a database. When the data record is created in a database, the data record can associate (e.g., logically link) the given candidate URL with a given matching account group and a given account that contains the given matching account group.

In some implementations, the mapping can also include the set of landing page queries that were generated for the given candidate URL. In these implementations, the inclusion of the landing page queries in the mapping enables these landing page queries to be used as qualifiers for using the given candidate URL to redirect a client device to the given candidate URL. For example, when a search query is received, the system can determine the similarity between the search query and the landing page queries, and only use the given candidate URL when the similarity between the search query and one of the landing page queries meets a specified similarity threshold.

A destination URL to which a client device is redirected is adjusted based on the mapping of the candidate URL (316). In some implementations, the adjustment to the destination URL can be performed in response to interaction with a digital component. For example, when the system detects that a digital component has been interacted with at a client device, the system can determine the search query that triggered distribution of the digital component with which the interaction occurred. In turn, the system can determine a similarity between the search query and the destination URLs that are available in the account group used to distribute the digital component.

The destination URLs of an account group can include URLs specified by an administrator of the account groups as well as URLs added by the system. For example, the destination URLs can include the given candidate URL that was mapped to the account group (e.g., added to the account group). The similarity between the candidate URL and the search query can be determined, for example, based on the landing page queries that were generated for the given candidate URL, as previously discussed. When the similarity of one of the landing page queries to the search query qualifies as a match (e.g., is higher than a specified similarity threshold), the given candidate URL can be selected as the destination URL/destination landing page for the interaction with the digital component. In response to the given candidate URL being selected as the destination URL, the system generates redirect data that causes the client device to be redirected to the given candidate URL.

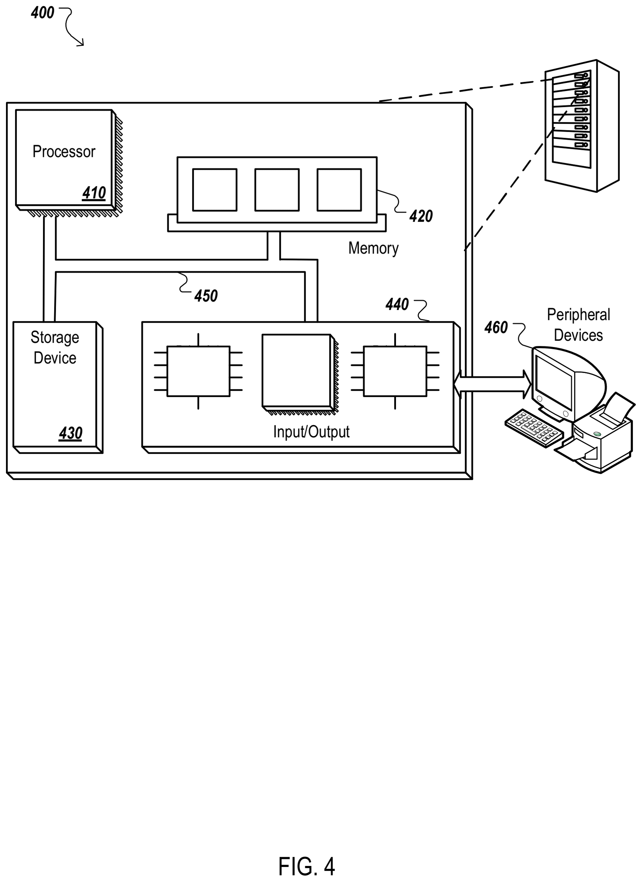

FIG. 4 is a block diagram of an example computer system 400 that can be used to perform operations described above. The system 400 includes a processor 410, a memory 420, a storage device 430, and an input/output device 440. Each of the components 410, 420, 430, and 440 can be interconnected, for example, using a system bus 450. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 can include, for example, a hard disk device, an optical disk device, a storage device that is shared over a network by multiple computing devices (e.g., a cloud storage device), or some other large capacity storage device.

The input/output device 440 provides input/output operations for the system 400. In one implementation, the input/output device 440 can include one or more of a network interface device, e.g., an Ethernet card, a serial communication device, e.g., and RS-232 port, and/or a wireless interface device, e.g., and 802.11 card. In another implementation, the input/output device can include driver devices configured to receive input data and send output data to other peripheral devices, e.g., keyboard, printer and display devices 460. Other implementations, however, can also be used, such as mobile computing devices, mobile communication devices, set-top box television client devices, etc.

Although an example processing system has been described in FIG. 4, implementations of the subject matter and the functional operations described in this specification can be implemented in other types of digital electronic circuitry, or in computer software, firmware, or hardware, including the structures disclosed in this specification and their structural equivalents, or in combinations of one or more of them.

An electronic document (which for brevity will simply be referred to as a document) does not necessarily correspond to a file. A document may be stored in a portion of a file that holds other documents, in a single file dedicated to the document in question, or in multiple coordinated files.

As used throughout this specification, the phrase "digital component" refers to a discrete unit of digital content or digital information (e.g., a video clip, audio clip, multimedia clip, gaming content, image, text, combination of image and text, bullet point, artificial intelligence output, language model output, or another unit of content or unit of combined content). A digital component can electronically be stored in a physical memory device as a single file or in a collection of files, and digital components can take the form of video files, audio files, multimedia files, image files, or text files and include advertising information, such that an advertisement is a type of digital component.

For situations in which the systems discussed here collect and/or use personal information about users, the users may be provided with an opportunity to enable/disable or control programs or features that may collect and/or use personal information (e.g., information about a user's social network, social actions or activities, a user's preferences or a user's current location). In addition, certain data may be treated in one or more ways before it is stored or used, so that personally identifiable information associated with the user is removed. For example, a user's identity may be anonymized so that the no personally identifiable information can be determined for the user, or a user's geographic location may be generalized where location information is obtained (such as to a city, ZIP code, or state level), so that a particular location of a user cannot be determined.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method, comprising:
obtaining, by a service system including one or more hardware processors, a set of candidate uniform resource locators (URLs) of web pages;
generating, by the service system and for a given candidate URL among the set of candidate URLs, a landing page representation of content accessible at the given candidate URL;
classifying, by the service system, the given candidate URL as a destination landing page for a subset of a plurality of existing account groups based on the landing page representation of the given candidate URL and account group representations of the subset of the plurality of existing account groups;
creating, by the service system, mappings between the candidate URL and the subset of the plurality of existing account groups based on the classification of the candidate URL as a destination landing page for the subset of the plurality of existing account groups; and
adjusting, by the service system, a destination URL to which a client device is redirected in response to interaction with a digital component based on the mapping between the candidate URL as a destination landing page and the subset of the plurality of existing account groups.

2. The method of claim 1, further comprising:
generating an account group representation of a given account group among the plurality of existing account groups, wherein the account group representation of the given account group among the plurality of existing account groups is a vector representing attributes of the given account group; and
computing a level of match between the account group representation of the given account group and the landing page representation, wherein:
classifying the candidate URL as a destination landing page comprises classifying the candidate URL as a destination landing page for the given account group based on the level of match being at least a minimum level of match.

3. The method of claim 2, wherein generating the account group representation of a given account group comprises:
identifying one or more of (i) a group URL of the given account group, (ii) a digital component of the given account group, (iii) queries serviced by the given account group, or (iv) distribution keywords assigned to the given account group;
generating, for the given account group, a compressed representation based on the one or more of (i) a group URL of the given account group, (ii) a digital component of the given account group, (iii) queries serviced by the given account group, or (iv) distribution keywords assigned to the given account group.

4. The method of claim 3, wherein creating the mappings between the set of matching account groups and the given candidate URL comprises creating a data record that associates the given candidate URL with a given account group and a given account that contains the given account group.

5. The method of claim 4, further comprising generating, for the given candidate URL, a set of landing page queries based, at least in part, on content accessible at the given candidate URL.

6. The method of claim 5, wherein:
generating the landing page representation of content accessible at the given candidate URL comprises generating the landing page representation based on content accessible at the given candidate URL and the set of matching queries; and
adjusting the destination URL to which the client device is redirected in response to interaction with the digital component comprises adjusting the destination URL to the given candidate URL based on a given query within the set of matching queries being matched by a search query submitted by a client device.

7. The method of claim 6, further comprising:
searching, by the service system, a plurality of existing account groups using the given candidate URL, wherein obtaining the set of candidate URLs comprises:
obtaining a given set of URLs of account groups;
obtaining a different set of URLs of a search system;
generating a union of the given set of URLs and the different set of URLs, wherein the generated union is the set of candidate URLs; and
extracting text or metadata from one or more landing pages at one or more candidate URLs in the set of candidate URLs or the one or more candidate URLs.

8. A non-transitory computer readable medium storing instructions that, upon execution by one or more data processing apparatus of a service system, cause the one or more data processing apparatus to perform operations comprising a method according to any preceding claim.

9. A system, comprising:
one or more memory devices; and
one or more data processing apparatus, including processing circuitry, configured to access the one or more memory devices and execute instructions that cause the one or more data processing apparatus to perform operations comprising
